# FASCICULE DE BREVET EUROPEEN

(11) **EP 3 427 158 B1**
(45) Date de publication et mention de la délivrance du brevet: **01.04.2020**
(21) Numéro de dépôt: 17707914.2
(22) Date de dépôt: 06.03.2017
(51) Int. Cl.: G06F 15/173, G06F 9/50

(54) **PROCEDE DE GESTION MEMOIRE AU SEIN D'UN ENSEMBLE DE DISPOSITIFS DE TRAITEMENT DE L'INFORMATION**
SPEICHERVERWALTUNGSVERFAHREN IN EINER REIHE VON INFORMATIONSVERARBEITUNGSVORRICHTUNGEN
MEMORY MANAGEMENT PROCESS IN A SET OF INFORMATION PROCESSING DEVICES

(30) Priorité: 07.03.2016 FR 1651891
(43) Date de publication de la demande: 16.01.2019
(73) Titulaire: Institut National Polytechnique de Toulouse, 31029 Toulouse Cedex 4 (FR); Centre National de la Recherche Scientifique, 75016 Paris (FR)
(72) Inventeur: HAGIMONT, Daniel, 31130 Balma (FR); TCHANA, Alain, 31200 Toulouse (FR)
(74) Mandataire: Gevers & Orès
(86) Numéro de dépôt international: PCT/EP2017/055116
(87) Numéro de publication internationale: WO 2017/153302

(56) Documents cités:
- US-A1- 2011 078 467
- Vlasia Anagnostopoulou ET AL: "Energy Conservation in Datacenters through Cluster Memory Management and Barely-Alive Memory Servers", Proceedings of the 2009 workshop on energy efficient design, 1 janvier 2009 (2009-01-01), pages 1-6, XP055330367, Texas, USA Extrait de l'Internet: URL:http://www.cs.rutgers.edu/~ricardob/pa pers/weed09.pdf [extrait le 2016-12-19]
- Aeiman Gadafi ET AL: "Thèse: Gestion mémoire dans une infrastructure répartie", Thèse Université Toulouse III - Paul Sabatier [FR], 7 octobre 2013 (2013-10-07), pages 1-108, XP055330370, France ISBN: 978-2-284-05163-3 Extrait de l'Internet: URL:http://ethesis.inp-toulouse.fr/archive /00002401/01/gadafi.pdf [extrait le 2016-12-19]

## Description

La présente invention concerne un procédé de gestion mémoire au sein d'un ensemble de dispositifs de traitement de l'information reliés par un réseau de communication.

Nous assistons aujourd'hui au développement d'une offre de services informatiques déportés, connue sous le nom de services dans le nuage (*cloud computing* en anglais).

Ces services sont typiquement hébergés dans des centres de données (*data center* en anglais) constitués d'un grand nombre d'ordinateurs, typiquement des serveurs, connectés entre eux par un réseau de communication à haut débit. On appelle aussi ces centres de données des fermes de serveurs. Les services proposés sont généralement implémentés sous la forme d'applications s'exécutant au sein de machines virtuelles, elle-même exécutée sur les serveurs physiques. Un même serveur physique permet d'héberger plusieurs machines virtuelles tant que les ressources physiques du serveur permettent de répondre à la charge demandée aux machines virtuelles. Un mécanisme de migration permet d'optimiser l'utilisation des serveurs physiques en déplaçant les machines virtuelles d'un serveur physique à un autre en fonction des ressources consommées par chaque machine virtuelle. Il est alors possible de concentrer sur un nombre réduit de machines physiques l'ensemble des machines virtuelles requises. Cette concentration est connue sous le nom de consolidation de la ferme de serveurs. Cette consolidation permet la mise en veille des serveurs physiques non utilisés de façon à économiser l'énergie consommée par la ferme de serveurs. Cette consolidation est généralement dynamique, les machines virtuelles migrant sur les serveurs au gré de la charge constatée sur chaque machine virtuelle. Lorsque la charge diminue, les machines virtuelles sont concentrées sur un nombre plus réduit de serveurs physiques qui s'avère suffisant, les autres étant mis en veille. Lorsque la charge augmente, des serveurs en veille sont réveillés de façon à héberger des machines virtuelles nécessitant leurs ressources. Ce mécanisme permet d'adapter en permanence le nombre de serveurs réveillés à la demande en ressource effective des différents services hébergés sous forme de machines virtuelles.

Il est à noter que la consolidation de serveurs peut être mise en œuvre dans des environnements non virtualisés, les applications étant déplacées par arrêt et redémarrage. L'invention peut aussi bien être mise en œuvre dans des environnements non virtualisés, même si les environnements virtualisés constituent un terrain privilégié d'application de l'invention.

Les ressources affectant la consolidation sont principalement les processeurs assurant les calculs et la mémoire vive nécessaire aux données manipulées par les services s'exécutant sur les processeurs. Les serveurs disposent aussi typiquement d'unités de stockage, tels des disques durs, mais les besoins en stockage sont généralement gérés par des unités de stockage indépendantes connectées en réseau aux serveurs. Les serveurs utilisés couramment présentent un ratio entre la puissance processeur et la quantité de mémoire disponible qui conduit à ce que ce soit cette quantité de mémoire disponible qui se trouve être la ressource limitante pour les services courants tels que des services Web de type e-commerce ou des systèmes de gestion d'entreprises comme les ERP (*Enterprise Ressource Planning* en anglais). Des études ont montré qu'un ordre de grandeur typique de la charge processeur est d'environ 20% alors que la mémoire est entièrement utilisée pour un serveur physique dans une ferme de serveurs ainsi consolidée. La mémoire vive du serveur physique se révèle donc être la ressource limitante du mécanisme de consolidation.

Dans un article intitulé "Energy Conservation in Datacenters through Cluster Memory Management and Barely-Alive Memory Servers" et publié dans Proceedings of the 2009 Workshop on energy efficiency design, 1er Janvier 2009, pages 1-6, XP055330367, Texas-USA (D1), Vlasia Anagnostopoulou *et al.* décrivent un exemple de procédé de gestion de mémoire au sein de plusieurs serveurs d'une ferme de serveurs selon l'état de la technique le plus proche vis-à-vis de l'invention telle que revendiquée.

La présente invention a pour but de résoudre les inconvénients précités en proposant un mécanisme permettant aux serveurs actifs d'étendre leur mémoire vive en utilisant la mémoire disponible des serveurs en veille. Cette utilisation se fait sans sortir les serveurs de leur veille en implémentant un gestionnaire de mémoire fonctionnant sur au moins un serveur actif et capable d'adresser en accès direct la mémoire des serveurs en veille sans nécessiter le fonctionnement du processeur de ces serveurs en veille. Ces serveurs en veille ont alors au moins leur mémoire, leur carte réseau et le moyen de communication entre les deux d'actif tandis qu'au moins leur processeur est en veille. Ces serveurs sont qualifiés de serveurs « zombies » dans ce document.

L'invention concerne un procédé de gestion mémoire au sein d'une pluralité de dispositifs de traitement de l'information reliés par un réseau de communication, chaque dispositif de traitement de l'information comportant au moins une unité de traitement, un module de mémoire vive, une carte d'entrée/sortie réseau permettant la communication avec ledit réseau de communication et un bus de communication permettant la communication entre ces différents éléments, qui contient : une étape d'émission par un applicatif exécuté sur un premier dispositif de traitement de l'information dont au moins l'unité de traitement est alimentée et fonctionnelle d'une requête en lecture ou écriture de données dans le module de mémoire vive d'un second dispositif de traitement de l'information dont au moins l'unité de traitement est en veille tandis qu'au moins le module de mémoire vive, la carte d'entrée/sortie réseau et le bus de communication sont alimentés et fonctionnels ; une étape de réception de ladite requête en lecture écriture ou écriture de données par la carte d'entrée/sortie réseau dudit second dispositif de traitement de l'information et une étape d'exécution de ladite requête en lecture ou écriture de données par la carte d'entrée/sortie réseau dudit second dispositif de traitement de l'information selon un mécanisme d'accès mémoire distant, ladite lecture ou écriture de données étant effectuée dans le module de mémoire dudit second dispositif de traitement de l'information sans solliciter l'unité de traitement en veille dudit second dispositif de traitement de l'information.

Selon un mode particulier de réalisation de l'invention, le procédé comporte en outre une étape de mise en veille dudit second dispositif de traitement de l'information consistant à mettre en veille au moins son unité de traitement tandis tandis qu'au moins le module de mémoire vive, la carte d'entrée/sortie réseau et le bus de communication restent alimentés et fonctionnels.

Selon un mode particulier de réalisation de l'invention, ladite étape de mise en veille est mise en œuvre sous la forme d'un nouvel état ACPI.

Selon un mode particulier de réalisation de l'invention, le procédé comporte en outre une étape d'allocation par ledit applicatif d'un espace mémoire au sein du module mémoire dudit second dispositif de traitement de l'information auprès d'un service d'allocation de mémoire distante.

Selon un mode particulier de réalisation de l'invention, le procédé comporte en outre une étape de notification auprès dudit service d'allocation de mémoire distante, par le second dispositif de traitement de l'information, lors de sa mise en veille, de la mémoire libre pouvant être allouée au sein de son module de mémoire.

Selon un mode particulier de réalisation de l'invention, le procédé comporte en outre une étape de notification auprès dudit service d'allocation de mémoire distante, par le second dispositif de traitement de l'information, lors de sa sortie de veille, de la mémoire cessant d'être disponible au sein de son module de mémoire.

Selon un mode particulier de réalisation de l'invention, ledit applicatif est un système de pagination dudit premier dispositif de traitement de l'information utilisant comme stockage secondaire la mémoire distante dudit second dispositif.

Selon un mode particulier de réalisation de l'invention, ledit applicatif est un module client ou un module de serveur de fichier au sein d'un système de fichiers distant utilisant comme cache la mémoire distante dudit second dispositif.

L'invention concerne également un programme d'ordinateur comprenant des instructions adaptées à la mise en œuvre de chacune des étapes du procédé selon l'invention lorsque ledit programme est exécuté sur un ordinateur.

L'invention concerne également un moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'invention.

Dans un mode particulier de réalisation, des étapes du procédé précité sont déterminées par des instructions de programmes d'ordinateurs.

En conséquence, l'invention vise aussi un programme d'ordinateur sur un support d'informations, ce programme étant susceptible d'être mis en œuvre par un microprocesseur, ce programme comprenant des instructions adaptées à la mise en œuvre des étapes du procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un microprocesseur, et comprenant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'informations peut être un circuit intégré dans lequel le programme est incorporé, le circuit étant adapté pour exécuter ou pour être utilisé dans l'exécution du procédé en question.

Le support d'informations et le programme d'ordinateur précités présentent des caractéristiques et avantages analogues au procédé qu'ils mettent en œuvre.

D'autres particularités et avantages de l'invention apparaîtront encore dans la description ci-après en relation avec les dessins annexés, donnés à titre d'exemples non limitatifs :
la figure 1 illustre l'architecture matérielle typique d'un serveur ou de tout dispositif de traitement de l'information ;
la **Figure 2** illustre l'architecture typique d'une ferme de serveurs.

Dans ce document on utilise le terme serveur pour qualifier un dispositif de traitement de l'information utilisé dans le cadre de l'invention. Ce terme doit s'entendre de manière générale et non limitative. Bien que faite dans le cadre de serveurs mis en œuvre dans des centres de données, l'invention peut être utilisée dans tout réseau de dispositifs de traitement de l'information au sens large.

Un serveur comprend typiquement une unité de traitement comprenant plusieurs processeurs physiques, chaque processeur étant lui-même composé d'un ensemble de cœurs de calcul. Ne s'intéressant pas à la répartition de l'applicatif sur les cœurs des différents processeurs physiques, ce document parle du processeur du serveur pour désigner l'ensemble de l'unité de traitement pour des raisons de clarté.

Un serveur est qualifié d'actif lorsque l'ensemble minimum de composants du serveur permettant l'exécution d'un applicatif et son interaction avec d'autres machines sont alimentés et fonctionnels, c'est-à-dire apte à remplir leur fonction. Il s'agit typiquement du processeur, de la mémoire vive, de l'unité de communication réseau et des moyens de communication entre ces éléments. Dès lors que cet ensemble minimal de composants est alimenté et fonctionnel, le serveur est qualifié d'actif indépendamment de la mise en veille potentielle d'éléments secondaires comme certains périphériques ou autres.

Un serveur est qualifié de serveur en veille dès lors qu'au moins le processeur, c'est-à-dire l'unité de traitement, est en veille. Le processeur est en veille lorsqu'il n'est plus alimenté et donc dans l'incapacité d'exécuter le moindre traitement. Il sera vu plus loin que l'état de veille du serveur peut se décomposer en plusieurs états de veille différents selon les composants qui cessent d'être alimentés. Tous ces états partagent toutefois la caractéristique qu'au moins le processeur est en veille.

Une des idées à la base de l'invention est de permettre à un applicatif, c'est-à-dire à un programme informatique ou ensemble de programmes informatiques, qui s'exécute sur un ou plusieurs serveurs actifs de pouvoir utiliser la mémoire vive de serveurs en veille auxquels ils sont connectés en réseau.

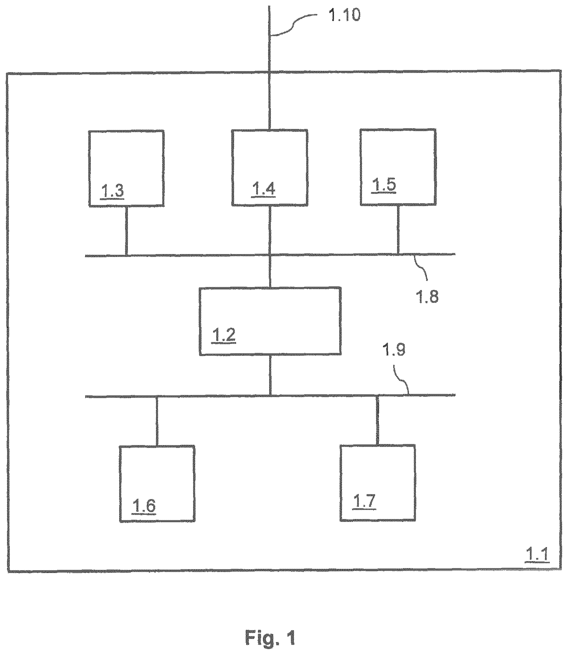

La **Figure 1** illustre l'architecture matérielle typique d'un serveur ou de tout dispositif de traitement de l'information.

Le serveur **1.1** comprend une unité de traitement **1.2**. Cet unité de traitement est composée d'au moins un processeur possédant un ou plusieurs cœurs de calcul. Cette unité est en charge de l'exécution des programmes informatiques s'exécutant sur le serveur. Ces programmes comprennent typiquement le système d'exploitation du serveur, un logiciel permettant l'exécution de machines virtuelle appelé hyperviseur et l'ensemble de ces machines virtuelles. Les machines virtuelles étant elles-mêmes composées d'un système d'exploitation et de logiciels applicatifs destinés à fournir les services aux usagers des serveurs.

L'unité de traitement **1.2** est connectée à un ensemble de périphériques **1.3** à **1.7** aux travers de bus de communication **1.8** et **1.9**. Les périphériques comprennent au moins un module de mémoire vive **1.3**. La mémoire vive est une mémoire volatile de travail destinée à stocker les programmes en cours d'exécution et les données sur lesquelles travaillent ces programmes. L'unité de traitement est également connectée via le bus **1.8** à un module d'entrée/sortie réseau **1.4** qui connecte le serveur à un réseau de communication **1.10**. Ce module d'entrée/sortie réseau **1.4** peut, par exemple, être une carte répondant à la norme InfiniBand permettant la connexion à un bus du même nom et permet l'interconnexion rapide d'un ensemble de serveurs. D'autres périphériques tels qu'un disque SSD (*Solid State Drive* en anglais) ou disque mémoire flash ou qu'un module GPGPU (*General-Purpose computation on Graphie Processing* en anglais), **1.5** peuvent être connectés à ce même bus **1.8**. Le bus **1.8** peut être dans les machines actuelles le bus PCIe (PCI Express). L'unité de traitement **1.2** est également connectée via un second bus de communication **1.9** à d'autres périphériques tels que des unités de stockage permanent comme des disques durs **1.6**, d'autres périphériques d'entrée/sortie comme une interface USB **1.7** etc...

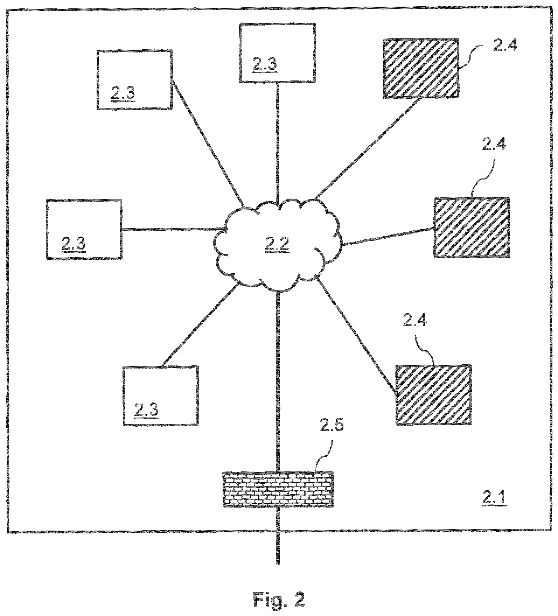

La **Figure 2** illustre l'architecture typique d'une ferme de serveurs **2.1**. Cette ferme de serveurs comprend un premier ensemble de serveurs **2.3** qui sont actifs. Ces serveurs sont donc alimentés et fonctionnels, ils hébergent les services rendu par le centre de données. Ces services sont essentiellement constitués par des machines virtuelles hébergées sur les serveurs actifs **2.3**. Ces serveurs sont interconnectés via un réseau de communication **2.2**, par exemple un bus infiniBand. La ferme de serveur est connectée à l'extérieur via un mur pare-feu (*firewall* en anglais) **2.5**. Cette connexion externe rend accessibles les services hébergés sur les serveurs actifs à des clients externes à la ferme. Par exemple, un serveur web de e-commerce est hébergé sur un ou plusieurs serveurs actifs. Un client accède au service par des requête selon le protocole web http (*Hyper Text Transfer Protocol* en anglais) qui transitent via le pare-feu **2.5**. La ferme de serveurs **2.1** héberge également un ensemble de serveurs **2.4** qui sont en veille. C'est-à-dire que ces serveurs sont dans un état où tous leurs composants ne sont pas alimentés de façon à économiser l'énergie. Ces serveurs ne sont typiquement pas complètement stoppés de façon à pouvoir être démarrés rapidement si une montée en charge est constatée sur les serveurs actifs. Dans ce cas, un ou plusieurs serveurs en veille sont réveillés. Un ou plusieurs des services faisant face à une montée en charge sont alors transférés ou initialisés sur les serveurs nouvellement réveillés pour permettre de répondre à la charge demandée. A l'inverse, lors d'une baisse de charge, les services peu chargés et initialement actifs sur plusieurs serveurs peuvent être migrés sur un seul serveur dont les ressources physiques sont suffisantes pour faire face à la charge. Les serveurs ainsi délestés de services actifs peuvent alors être mis en veille, c'est le processus de consolidation. Ainsi, dynamiquement, en fonction de la charge effective affectant les services actifs, ces derniers sont déployés sur un ensemble réduit, mais suffisant, pour répondre à la charge constatée. Ceci permet de ne faire fonctionner que l'ensemble de serveurs dont les ressources sont strictement nécessaires au fonctionnement des services actifs.

L'un des aspects principaux de l'invention repose sur l'accès par des services hébergés sur des serveurs actifs à la mémoire vive de serveurs en veille. Cet accès repose sur le mécanisme d'accès mémoire distant ou RDMA (*Remote Direct Memory Access* en anglais). Beaucoup de carte d'entrée/sortie réseau disposent aujourd'hui d'un mécanisme d'accès mémoire distant comme, par exemple, les cartes répondant au standard InfiniBand maintenu par l'association « InfiniBand trade association ». La société Mellanox, par exemple, produit de telles cartes. Le mécanisme d'accès mémoire distant permet à un programme s'exécutant sur une machine distante connectée en réseau avec le serveur cible d'envoyer via le réseau des commandes de lecture/écriture dans la mémoire du serveur cible. Ces commandes de lecture/écriture mémoire sont alors exécutées par la carte réseau et affectent directement la mémoire vive du serveur cible via le bus interconnectant la carte réseau et le module mémoire et ceci sans nécessiter l'intervention de l'unité de traitement, c'est-à-dire des processeurs du serveur cible. On comprend dès lors que ce mécanisme est opérationnel et peut être implémenter alors que le serveur cible est en veille, c'est-à-dire qu'au moins son unité de traitement n'est pas alimentée. Bien évidemment, il est nécessaire qu'au moins la carte réseau, le bus de communication entre cette carte et la mémoire et enfin cette mémoire soient des composants alimentés du serveur cible.

Les états de veille des serveurs sont aujourd'hui déterminés typiquement selon une norme appelée ACPI (*Advanced Configuration and Power Interface* en anglais). Cette norme définit un ensemble d'états du système pour un ordinateur au sens large et notamment un serveur. Les états définis par la norme sont les états globaux (*Global State* en anglais) G0, G1, G2 et G3. Chacun des états peut être subdivisé par l'utilisation d'un état de sommeil (*Sleep State* en anglais) déterminé par la lettre S affublée d'un index : S0, S1, S2, S3, S4 et S5.

On distingue plus précisément les états suivants :
- G0/S0 : qui correspond à l'état actif, l'ordinateur est entièrement en service, tous ses composants sont alimentés.
- G1 : correspond à un état de veille, aucun processeur n'exécute d'instruction, pourtant l'utilisateur n'a pas demandé un arrêt complet de l'ordinateur. Pour quitter cet état le système d'exploitation n'a pas à ré-exécuter toute la séquence d'amorçage mais reprend son fonctionnement à partir de l'état dans lequel il était avant cet arrêt. Cet état est subdivisé en plusieurs sous-états :
   ∘ G1/S1, (*power on suspend* en anglais) : aucun processeur n'exécute d'instruction, mais aucun contexte d'exécution n'est perdu et l'ordinateur pourra quitter cet état très rapidement. Dans cet état, l'alimentation est toujours en service mais les disques sont stoppés (comme dans tous les états suivants).
   ∘ G1/S2 : état de sommeil plus profond, les processeurs devront être réinitialisés au réveil, le système d'exploitation devra ensuite restaurer les différents contextes d'exécution. Cet état est documenté dans la spécification ACPI mais rarement mis en œuvre.
   ∘ G1/S3, (*standby* ou *suspend to ram* en anglais) : dans cet état l'ordinateur éteint l'alimentation principale, mais l'état de la mémoire centrale est maintenu en employant une alimentation permanente (appelée 5VSB, pour +5V *standby* en anglais). Ainsi il restaurera son état initial plus rapidement que depuis l'état G1/S4.
   ∘ G1/S4, (*hibernate* ou *suspend to disk* en anglais) : l'état du système (en particulier le contenu de la mémoire et les contextes d'exécution des processeurs) a été sauvegardé (le plus souvent dans un fichier d'hibernation sur un disque dur). L'ensemble des composants de l'ordinateur est sans alimentation. À sa remise en service, le système d'exploitation devra recharger ce fichier d'hibernation et restaurera alors l'état de l'ordinateur.
- G2/S5, arrêt piloté (*soft off* en anglais) : la consommation électrique est la plus réduite possible et aucun état courant de l'ordinateur n'a été sauvegardé (l'utilisateur a demandé au système de s'arrêter complètement) cependant l'alimentation bien que stoppée est toujours connectée à une source électrique et fournit l'alimentation permanente 5VSB (le clavier ainsi que la souris et la carte réseau peuvent rester alimentés, si le BIOS est configuré pour cela ; leur usage permettra alors de démarrer à nouveau). Lors de la remise en service le système d'exploitation devra exécuter toute la séquence d'amorçage avant d'être disponible.
- G3, arrêt mécanique : dans cet état un interrupteur mécanique a été manœuvré et seule une manœuvre humaine peut permettre de démarrer l'ordinateur. On pourrait croire que dans cet état plus aucun composant n'est alimenté, mais c'est inexact : dans un PC par exemple une pile (le plus souvent au lithium) alimente encore un petit circuit CMOS et permet de maintenir quelques informations de configuration, ainsi qu'une horloge.

Aucun de ces états de veille ne correspond exactement aux besoins de l'invention car soit ils éteignent trop de composants matériels de la machine (ce qui rend l'accès à la mémoire distante non fonctionnel), soit ils n'en éteignent pas assez (ce qui revient à ne pas éteindre le serveur et à gaspiller de l'énergie).

Pour répondre à ce besoin un nouvel état de veille, que l'on nomme G1/S3' est défini. Dans cet état, proche de l'état défini par la norme sous l'appellation G1/S3, l'unité de traitement n'est plus alimentée mais la carte réseau, le bus de communication et le module mémoire le sont toujours. L'état G1/S3 implique la sauvegarde de l'état de la mémoire vive de l'appareil. Ceci implique typiquement un maintien de cette mémoire dans un mode connu sous le nom de mode de rafraîchissement ou *Self Refresh mode* en anglais. Dans ce mode, l'état de la mémoire est rafraîchit régulièrement pour permettre aux informations mémorisées de persister, mais les opérations de lecture écriture ne sont pas possible. Ce mode n'est donc pas compatible avec l'invention qui nécessite la possibilité d'effectuer des opérations de lecture écriture en mémoire. Il est donc nécessaire que dans le mode G1/S3' ici défini, la mémoire soit pleinement opérationnelle. Selon le mode de réalisation de l'invention choisi, l'état mémoire du serveur peut être maintenu ou pas. Dans le cas où une image de l'état du serveur est maintenue en mémoire, la mémoire disponible pour l'invention est réduite d'autant.

Selon un premier mode de réalisation de l'invention, les serveurs mis en veille dans une ferme de serveurs sont mis en veille selon le nouveau mode de veille G1/S3' défini plus haut. Ils disposent d'une carte mémoire compatible avec l'accès mémoire distant. Leur mémoire vive devient donc accessible aux services hébergés sur les serveurs actifs qui peuvent ainsi étendre à la mémoire des serveurs en veille leur besoins en mémoire. Il est à noter que le temps d'accès à une mémoire distante via le mécanisme d'accès mémoire distant présente des performances du même ordre que l'accès à de la mémoire locale et ne vient donc pas pénaliser les services actifs.

Bien que fonctionnel, ce premier mode de réalisation peut poser des problèmes de sécurité dans l'accès à la mémoire. En effet, dans certains modes de réalisation, la mémoire vive des serveurs en veille contient une image qui permet le redémarrage rapide du serveur et qui doit être préservée contre d'éventuelles opérations d'écriture intempestive qui viendraient corrompre cette image. Il peut être également utile de gérer des allocations concurrentes dans la mémoire des serveurs en veille qui pourraient émaner de différents services exécutés sur les serveurs actifs.

Selon un second mode de réalisation de l'invention, un service d'allocation de mémoire distante ou RMMU (*Remote Memory Management Unit* en anglais) est mis en place pour gérer les allocations/libération de mémoire distante au sein des serveurs en veille. Ce service d'allocation de mémoire distante fonctionne sur un serveur actif, en effet, il nécessite une unité de traitement fonctionnelle pour son exécution. Ainsi un applicatif sur un serveur procède à une étape d'allocation d'un espace mémoire au sein du module mémoire d'un second dispositif de traitement de l'information auprès d'un service d'allocation de mémoire distante sachant que plusieurs instances dudit applicatif s'exécutant sur différentes instances dudit premier dispositif peuvent être en concurrence pour l'allocation de la mémoire d'une même instance dudit second dispositif. Lorsqu'un serveur bascule en mode veille selon ce mode de réalisation de l'invention, il notifie le service de mémoire distante de la mémoire libre pouvant être allouée sur ce serveur. Un service qui s'exécute sur un serveur actif et qui désire allouer de la mémoire distante sur un serveur en veille effectue une allocation auprès du service de mémoire distante et se voit réserver un espace mémoire au sein de la mémoire d'un ou plusieurs serveurs en veille. Lorsqu'un service actif n'a plus besoin de la mémoire distante allouée, il peut libérer l'espace préalablement alloué auprès du service d'allocation de mémoire distante. Si un serveur en veille doit être activé, il notifie alors au service d'allocation de mémoire distante que sa mémoire n'est plus disponible. Les services qui avaient alloué de la mémoire au sein de ce serveur sont alors, à leur tour, notifiés d'une obligation de libération de la mémoire. Cette libération peut être compensée par une nouvelle allocation auprès d'autres serveurs en veille via le service d'allocation mémoire distante. Ainsi, les données peuvent être conservées dans la mémoire d'un autre serveur en veille.

Selon un premier exemple d'utilisation de l'invention, le mécanisme d'accès à de la mémoire distante est utilisé par le système de pagination (*swap* en anglais) d'au moins un serveur actif. Lorsqu'un programme est exécuté sur un ordinateur, il se voit allouer un espace mémoire pour son fonctionnement. Dans un souci d'efficacité et d'économie de la mémoire, l'allocation mémoire réelle pour le fonctionnement du programme est inférieure aux besoins maximum en mémoire du programme. La mémoire allouée est divisée en page mémoire et un mécanisme de pagination sur disque est mis en place. Ce mécanisme autorise la sauvegarde sur disque d'une page mémoire peu utilisée pour allouer l'espace mémoire correspondant à une page mémoire plus utilisée. Lorsque le programme doit accéder à des données contenues dans une page mémoire qui a ainsi été sauvegardée sur le disque, il est alors nécessaire de libérer une page mémoire en mémoire centrale pour recharger la page sauvegardée depuis le disque et ainsi rendre ses données disponibles. Ce mécanisme très courant permet de limiter la mémoire allouée au programme au prix d'accès disque pour gérer l'accès aux données peu utilisées. Plus on limite la taille de la mémoire réellement disponible pour le programme, plus le mécanisme de pagination sur disque est sollicité lors du fonctionnement dudit programme et plus les performances se dégradent. Dans ce premier exemple d'utilisation de l'invention, le système de pagination est modifié pour permettre une allocation de mémoire distante. Un mécanisme de pagination à deux niveaux est alors implémenté. Un premier niveau de pagination permet la pagination, c'est-à-dire la sauvegarde de pages mémoire, au sein de la mémoire distante d'un serveur en veille. La pagination classique sur disque n'intervient alors que lorsque cet espace de mémoire distante est saturé. Comme nous l'avons vu, les performances d'accès à la mémoire distante sont du même ordre que l'accès à la mémoire locale. Le premier niveau de pagination au sein de la mémoire distante n'est donc pas pénalisant au niveau des performances d'exécution du programme. Ce mécanisme, en permettant d'étendre la mémoire disponible pour un programme via une pagination dans de la mémoire distante, permet donc de limiter l'usage à la pagination sur disque et permet donc d'augmenter la performance des services sur les serveurs actifs. De manière duale, on peut considérer que ce système permet de diminuer la mémoire allouée sur le serveur actif à l'exécution du programme en maintenant les performances par une allocation de mémoire distante et donc d'augmenter la consolidation des serveurs sans dégrader les performances.

Selon un second exemple d'utilisation de l'invention, la mémoire distante est utilisée par un système de fichier distant. Dans un tel système, un premier serveur au sein de la ferme de serveurs dispose d'un espace de stockage, typiquement du disque qu'il met à disposition d'autres serveurs de la ferme. Ce premier serveur est appelé un serveur de fichiers. Les autres serveurs peuvent accéder à l'espace de stockage ainsi offert par le serveur de fichier et sont appelés les clients du serveur de fichier. Un exemple d'un tel système de serveur de fichier est le service NFS (*Network File System* en anglais). Le fonctionnement du service de fichiers distant nécessite le fonctionnement d'un module serveur de fichier sur le serveur de fichier et d'un module client sur le client du serveur de fichier. Un programme s'exécutant sur le client voit l'espace de stockage mis à disposition par le serveur de fichier comme un stockage local. Les requêtes d'accès aux données stockées sur le serveur de fichiers sont alors relayées par le module client au module serveur, traitées par le serveur de fichier et leur résultat transmis au client au travers du réseau de communication. Ce mécanisme n'est pas décrit plus en détail étant bien connu de l'homme du métier. Les clients comme le serveur de fichier doivent être en mesure d'exécuter les modules clients et le module serveur de fichier et sont donc nécessairement hébergés sur des serveurs actifs au sein de la ferme de serveurs. Pour accélérer les accès aux données mémorisées dans l'espace de stockage distant du serveur de fichier, tant le module client que le module serveur de fichier maintiennent un cache en mémoire pour sauvegarder les dernières données lues ou écrites sur le serveur de fichier. Ainsi, un nouvel accès à ces données peut être servi depuis le cache sans nécessiter l'accès au disque distant et donc de manière beaucoup plus rapide. Ce mécanisme de cache, côté client et côté serveur, est classique et bien connu des systèmes de fichiers distants. L'utilisation de l'invention sert ici à étendre à de la mémoire distante au sein de serveurs en veille, l'espace mémoire dédié aux caches du module client et/ou du module serveur de fichier. Il est alors possible soit d'améliorer les performances du système de fichier distant par l'utilisation de caches de plus grande capacité ou alors de limiter, à performance égale, la taille de la mémoire allouée sur le client et/ou sur le serveur de fichier à ces caches. L'invention permet donc également dans cet exemple, soit d'augmenter les performances ou de maintenir les performances en augmentant le taux de consolidation des serveurs.

Dans ce mode de réalisation, l'appareil est un appareil programmable qui utilise un logiciel pour mettre en œuvre l'invention. Toutefois, à titre subsidiaire, la présente invention peut être mise en œuvre dans le matériel (par exemple, sous la forme d'un circuit intégré spécifique ou ASIC).

Naturellement, pour satisfaire des besoins spécifiques, une personne compétente dans le domaine de l'invention pourra appliquer des modifications dans la description précédente.

Bien que la présente invention ait été décrite ci-dessus en référence à des modes de réalisation spécifiques, la présente invention n'est pas limitée aux modes de réalisation spécifiques, et les modifications qui se trouvent dans le champ d'application de la présente invention seront évidentes pour une personne versée dans l'art.

## Revendications

1. Procédé de gestion mémoire au sein d'une pluralité de dispositifs de traitement de l'information reliés par un réseau de communication, chaque dispositif de traitement de l'information comportant au moins une unité de traitement, un module de mémoire vive, une carte d'entrée/sortie réseau permettant la communication avec ledit réseau de communication et un bus de communication permettant la communication entre ces différents éléments, **caractérisé en ce qu'**il contient :
- une étape d'émission par un applicatif exécuté sur un premier dispositif de traitement de l'information dont au moins l'unité de traitement est alimentée et fonctionnelle d'une requête en lecture ou écriture de données dans le module de mémoire vive d'un second dispositif de traitement de l'information dont au moins l'unité de traitement est en veille tandis qu'au moins le module de mémoire vive, la carte d'entrée/sortie réseau et le bus de communication sont alimentés et fonctionnels ;
- une étape de réception de ladite requête en lecture écriture ou écriture de données par la carte d'entrée/sortie réseau dudit second dispositif de traitement de l'information ;
- une étape d'exécution de ladite requête en lecture ou écriture de données par la carte d'entrée/sortie réseau dudit second dispositif de traitement de l'information selon un mécanisme d'accès mémoire distant, ladite lecture ou écriture de données étant effectuée dans le module de mémoire dudit second dispositif de traitement de l'information sans solliciter l'unité de traitement en veille dudit second dispositif de traitement de l'information ;
- une étape d'allocation par ledit applicatif d'un espace mémoire au sein du module mémoire dudit second dispositif de traitement de l'information auprès d'un service d'allocation de mémoire distante ; et
- une étape de notification auprès dudit service d'allocation de mémoire distante, par le second dispositif de traitement de l'information, lors de sa mise en veille, de la mémoire libre pouvant être allouée au sein de son module de mémoire.

2. Procédé de gestion de mémoire selon la revendication 1, **caractérisé en ce qu'**il comporte en outre :
- une étape de mise en veille dudit second dispositif de traitement de l'information consistant à mettre en veille au moins son unité de traitement tandis qu'au moins le module de mémoire vive, la carte d'entrée/sortie réseau et le bus de communication restent alimentés et fonctionnels.

3. Procédé de gestion de mémoire selon la revendication 2, **caractérisé en ce que** ladite étape de mise en veille est mise en œuvre sous la forme d'un nouvel état ACPI.

4. Procédé de gestion de mémoire selon l'une des revendications 1 à 3, **caractérisé en ce qu'**il comporte en outre :
- une étape de notification auprès dudit service d'allocation de mémoire distante, par le second dispositif de traitement de l'information, lors de sa sortie de veille, de la mémoire cessant d'être disponible au sein de son module de mémoire.

5. Procédé de gestion de mémoire selon l'une des revendications 1 à 4, **caractérisé en ce que** ledit applicatif est un système de pagination dudit premier dispositif de traitement de l'information utilisant comme stockage secondaire la mémoire distante dudit second dispositif.

6. Procédé de gestion de mémoire selon l'une des revendications 1 à 5, **caractérisé en ce que** ledit applicatif est un module client ou un module de serveur de fichier au sein d'un système de fichiers distant utilisant comme cache la mémoire distante dudit second dispositif.

7. Programme d'ordinateur comprenant des instructions adaptées à la mise en œuvre de chacune des étapes du procédé selon l'une quelconque des revendications 1 à 6 lorsque ledit programme est exécuté sur un ordinateur.

8. Moyen de stockage d'informations, amovible ou non, lisible par un ordinateur ou un microprocesseur comportant des instructions de code d'un programme d'ordinateur adaptées à la mise en œuvre de chacune des étapes du procédé selon l'une quelconque des revendications 1 à 6 lorsque ledit programme est exécuté sur un ordinateur.

## Patentansprüche

1. Speicherverwaltungsverfahren in einer Mehrzahl von Informationsverarbeitungsvorrichtungen, die durch ein Kommunikationsnetz verbunden sind, wobei jede Informationsverarbeitungsvorrichtung mindestens eine Verarbeitungseinheit, ein Arbeitsspeichermodul, eine Netzein-/Ausgangskarte, die die Kommunikation mit dem Kommunikationsnetz ermöglicht, und einen Kommunikationsbus, der die Kommunikation zwischen diesen verschiedenen Elementen ermöglicht, beinhaltet, **dadurch gekennzeichnet, dass** es Folgendes enthält:
- einen Schritt des Sendens einer Anforderung zum Lesen oder Schreiben von Daten im Arbeitsspeichermodul einer zweiten Informationsverarbeitungsvorrichtung, von der zumindest die Verarbeitungseinheit im Ruhezustand ist, während zumindest das Arbeitsspeichermodul, die Netzein-/Ausgangskarte und der Kommunikationsbus mit Strom versorgt und funktionsfähig sind, durch eine Anwendung, die auf einer ersten Informationsverarbeitungsvorrichtung ausgeführt wird, von der zumindest die Verarbeitungseinheit mit Strom versorgt wird und funktionsfähig ist;
- einen Schritt des Empfangens der Anforderung zum Lesen oder Schreiben von Daten durch die Netzein-/Ausgangskarte der zweiten Informationsverarbeitungsvorrichtung;
- einen Schritt des Ausführens der Anforderung zum Lesen oder Schreiben von Daten durch die Netzein-/Ausgangskarte der zweiten Informationsverarbeitungsvorrichtung gemäß einem Fernspeicherzugriffsmechanismus, wobei das Lesen oder Schreiben von Daten in dem Speichermodul der zweiten Informationsverarbeitungsvorrichtung durchgeführt wird, ohne die im Ruhezustand befindliche Verarbeitungseinheit der zweiten Informationsverarbeitungsvorrichtung anzufordern;
- einen Schritt des Zuweisens eines Speicherplatzes im Speichermodul der zweiten Informationsverarbeitungsvorrichtung durch die Anwendung bei einem Fernspeicherzuweisungsdienst; und
- einen Schritt des Mitteilens bei dem Fernspeicherzuweisungsdienst durch die zweite Informationsverarbeitungs-vorrichtung, bei deren Versetzen in den Ruhezustand, des freien Speichers, der in ihrem Speichermodul zugewiesen werden kann.

2. Speicherverwaltungsverfahren nach Anspruch 1, **dadurch gekennzeichnet, dass** es weiter Folgendes beinhaltet:
- einen Schritt des Versetzens der zweiten Informationsverarbeitungsvorrichtung in den Ruhezustand, der darin besteht, zumindest ihre Verarbeitungseinheit in den Ruhezustandzu versetzen, während zumindest das Arbeitsspeichermodul, die Netzein-/Ausgangskarte und der Kommunikationsbus mit Strom versorgt und funktionsfähig bleiben.

3. Speicherverwaltungsverfahren nach Anspruch 2, **dadurch gekennzeichnet, dass** der Schritt des Versetzens in den Ruhezustand in Form eines neuen ACPI-Zustandes umgesetzt wird.

4. Speicherverwaltungsverfahren nach einem der Ansprüche 1 bis 3, **dadurch gekennzeichnet, dass** es weiter Folgendes beinhaltet:
- einen Schritt des Mitteilens bei dem Fernspeicherzuweisungsdienst durch die zweite Informationsverarbeitungsvorrichtung, beim Verlassen des Ruhezustands, dass der Speicher in ihrem Speichermodul nicht mehr verfügbar ist.

5. Speicherverwaltungsverfahren nach einem der Ansprüche 1 bis 4, **dadurch gekennzeichnet, dass** es sich bei der Anwendung um ein Paging-System der ersten Informationsverarbeitungsvorrichtung handelt, das als Sekundärablage den Fernspeicher der zweiten Vorrichtung verwendet.

6. Speicherverwaltungsverfahren nach einem der Ansprüche 1 bis 5, **dadurch gekennzeichnet, dass** es sich bei der Anwendung um ein Clientmodul oder ein Dateiservermodul in einem Ferndateisystem handelt, das den Fernspeicher der zweiten Vorrichtung als Cache verwendet.

7. Computerprogramm, umfassend Anweisungen, die geeignet sind, jeden der Schritte des Verfahrens nach einem der Ansprüche 1 bis 6 umzusetzen, wenn das Programm auf einem Computer ausgeführt wird.

8. Informationsablagemittel, entfernbar oder nicht, das von einem Computer oder einem Mikroprozessor lesbar ist, umfassend Codeanweisungen eines Computerprogramms, die geeignet sind, jeden der Schritte des Verfahrens nach einem der Ansprüche 1 bis 6 umzusetzen, wenn das Programm auf einem Computer ausgeführt wird.

## Claims

1. Memory management process within a plurality of data processing devices interconnected by a communication network, each data processing device comprising at least one processing unit, one RAM module, one network input/output card enabling communication with said communication network and a communication bus enabling communication between these various components, **characterised in that** it comprises:
- a step whereby an application executed on a first data processing device featuring at least a powered and operational processing unit issues a data read or write request in the RAM module of a second data processing device featuring at least a processing unit in standby mode whereas at least its RAM module, its network input/output card and its communication bus are powered and operational;
- a step whereby said data read or write request is received by the network input/output card of said second data processing device;
- a step whereby said data read or write request is executed by the network input/output card of said second data processing device according to a remote memory access mechanism, said data read or write being performed in the memory module of said second data processing unit without relying on the standby processing unit of said second data processing device;
- a step whereby said application allocates a memory space within the memory module of said second data processing device to a remote memory allocation service; and
- a step whereby the second data processing device notifies said remote memory allocation service, when being placed in standby, of the free memory that can be allocated within its memory module.

2. Memory management process according to claim 1, **characterised in that** it further comprises:
- a standby step whereby said second data processing device is placed in standby mode by putting at least its processing unit in standby mode, while at least the RAM module, the network input/output card and the communication bus remain powered and functional.

3. Memory management process according to claim 2, **characterised in that** said standby step is implemented in the form of a new ACPI state.

4. Memory management process according to any one of claims 1 to 3, **characterised in that** it further comprises:
- a notification step whereby the second data processing device notifies said remote memory allocation service, when being taken out of standby mode, of the free memory that is no longer available within its memory module.

5. Memory management process according to any one of claims 1 to 4, **characterised in that** said application is a swap system of said first data processing device using as secondary storage the remote memory of said second device.

6. Memory management process according to any one of claims 1 to 5, **characterised in that** said application is a client module or a file server module within a remote file system using as cache the remote memory of said second device.

7. Computer programme comprising instructions adapted for the implementation of each of the steps of the memory management process according to any one of claims 1 to 6, when said programme is executed on a computer.

8. Means for storing data, removable or not, partially or fully readable by a computer or a microprocessor comprising the code instructions of a computer programme for the execution of each one of the steps of the process according to claims 1 to 6, when said programme is executed on a computer.
